# EUROPEAN PATENT SPECIFICATION

(11) **EP 0 780 427 B1**
(45) Date of publication and mention of the grant of the patent: **27.03.2002**
(21) Application number: 96119285.3
(22) Date of filing: 02.12.1996
(51) Int. Cl.: C08K 5/11, C08K 3/00, C08L 23/04

(54) **Reinforced thermoplastic polyolefin compositions**
Gefüllte thermoplastische Polyolefinzusammensetzung
Composition de polyoléfine thermoplastique renforcée

(30) Priority: 21.12.1995 IT MI952703
(43) Date of publication of application: 25.06.1997
(73) Proprietor: ENICHEM S.p.A., 20124 Milano (IT)
(72) Inventor: Tavan, Mario, Padova (IT); Venti, Paolo, Padova (IT); Boscolo Boscoletto, Angelo, Sottomarina di Chioggia (IT); Moro, Alessandro, Cazzago di Pioniga (Venezia) (IT); Pippa, Roberto, Noale (Venezia) (IT)
(74) Representative: Fusina, Gerolamo

(56) References cited:
- DD-A- 200 429
- DD-A- 290 904
- GB-A- 1 092 175
- PATENT ABSTRACTS OF JAPAN vol. 013, no. 024 (C-561), 19 January 1989 & JP 63 227657 A (NIPPON SODA CO LTD), 21 September 1988,

## Description

The present invention relates to a process for the preparation of reinforced thermoplastic polyolefin compositions. suitable for the production of articles having, even at temperatures lower than 0°C, resilience mechanical properties which are much higher than those of the corresponding non-reinforced polyolefin compositions.

As is known, polyolefins are used in a wide variety of applications which comprise films, fibres, moulded or thermoformed articles, pipes, coatings, etc. In some of these applications, especially in the production of moulded articles, the product to be moulded must have rigidity and/or shock-resistance properties which are higher than those of the polyolefin as such.

Many techniques for modifying the properties of polyolefins are known and described in literature, comprising the cross-linking of the polymer or the incorporation of additives, for example elastomers, or of fillers, for example glass fibres, kaolin, mica, oxides or hydrates or sulfates or carbonates of metals of the second or third group of the Periodic Table, etc., into the polymeric matrix. Polyolefin compositions reinforced with fillers generally tend to have a higher rigidity than that of the neat starting polymer and also an improved dimensional stability of the end-products.

It is known, however, that polyolefins, owing to their non-polar nature, are not suitable for being reinforced with inorganic fillers or additives. In fact, the increase in rigidity and dimensional stability is usually accompanied by a lowering of other properties among which the toughness, resilience, etc.

A proposal for overcoming this disadvantage is to modify the olefinic polymer by grafting monomers having polar groups such as maleic anhydride or maleic acid, onto the hydrocarbon chain as described, for example, in European patent EP 257.796.

The grafting reaction between maleic anhydride or maleic acid and the polyolefin can be carried out when the mineral filler is incorporated into the molten polymeric matrix by adding suitable radicalic initiators such as peroxides, as described, for example, in U.S. patent 4.317.765. This process however can have the drawback of a high cross-linking of the polymeric matrix with a consequent increase in the viscosity of the molten product and a reduction in the workability.

As an alternative to grafting with maleic anhydride or maleic acid and peroxides, particular substances can be used in the preparation of the polyolefin composition, called "adhesion promoters", i.e. compounds which give an improved adhesion or bond between the filler and polymeric matrix. Among "adhesion promoters" a known group consists of silane esters described, for example, in European patent applications EP 614.937 and EP 598.441 and in U.S. patent 5.457.145.

Polyolefin compositions for injection moulding containing a mineral filler which, with the use of compatibilizing substances, added in a suitable sequence, maintain good flow properties and enable the production of products having a high impact strength, are described, for example, in German patent DD 200.429. These compositions comprise:
(a) 40%-80% by weight of high density polyethylene and/or polypropylene;
(b) 20%-60% of surface-treated chalk having grain size of 0.5-60 µm and/or talc having grain size of 2-63 µm;
(c) 0.5%-5% of polyethyleneglycol having a molecular weight of 400; and
(d) 0.01%-0.1% of maleic acid.

The polyolefin compositions obtained as described in the above patent are capable of giving end-products with good properties both in terms of rigidity and elasticity modulus. At the same time, these compositions, thanks to the use of maleic acid and polyethyleneglycol having a molecular weight of 400, as well as having an improved fluidity, improve the impact-strength of the end-products: for example, in the case of a composition containing 60% by weight of high density polyethylene (HDPE) and 40% by weight of kaolin pre-impregnated at a high temperature, end-products are obtained with an increase in the tensile impact strength from 5 to 8 kJ/m², accompanied by a slight decrease in the elasticity modulus from 1400 to 1100 N/mm², whereas the "Melt Flow Index" (MFI) at 190°C and 5 Kg of the above composition changes from 15 to 17 g/10'.

German patent DD 290.904 on the other hand describes a polyolefin composition comprising:
(a) polyethylene and/or polypropylene;
(b) inorganic mineral fillers;
(c) 0.1%-10% of one or more acid esters having the formula:

   R-OCO-Z-COOH

   wherein:
   - R represents a C₁-C₄ alkyl group, a 2-hydroxypropyl group, a CH₃CH(OH)CH₂[OCH(CH₃)CH₂]ₙ group wherein n is an integer from 1 to 16;
   - Z represents a -CH=CH- group or a phenyl group.

This composition has good properties for rigidity, elasticity modulus, impact strength and hardness. For example, in the case of a composition containing 70% by weight of high density polyethylene (HDPE) with a density equal to 0.955 g/cm³ and a "Melt Flow Index" (MFI) equal to 30 g/10' and 30% by weight of kaolin pre-impregnated at a high temperature, end-products are obtained having the following characteristics:
- elasticity modulus: 1250 MPa;
- tensile strength: 25.1 MPa;
- tensile impact strength: 23.5 kJ/m².

The Applicant has now found that the use of unsaturated esters combined with conventional mineral fillers, without the necessity of pre-impregnating the filler, enables the production of reinforced thermoplastic polyolefin compositions suitable for the production of articles having high resilience mechanical properties also at low temperatures (-40°C). In addition, the above esters, unlike maleic anhydride, have a low volatility and consequently do not damage the health of the operators and can be introduced into the composition with the help of suitable carrying agents such as, for example, alcohols or glycols, or their mixtures with water, acetone, toluene, tetrahydrofuran, etc.

The present invention therefore relates to a process for the preparation of reinforced thermoplastic polyolefin compositions comprising mixing :
(A) from 30% to 98% by weight of a polyolefin selected from homopolymers of ethylene and/or copolymers of ethylene with at least another α-olefin containing from 3 to 10 carbon atoms, and respectively;
(B) from 70% to 2% by weight of a mineral filler;
(C) from 0.1 to 10 parts by weight with respect to 100 parts of (A) + (B) of an unsaturated ester having general formula (I):

   R₁-OCO-Z-COOR₂ (I)

   wherein:
   - R₁ and R₂, the same or different, represent one of the following groups having general formula (II) or (III):

      HOCH₂CH₂-[OCH₂CH₂]ₙ - (II)

      wherein n is an integer or fraction between 0 and 2, extremes included;

      R₃-[OCO-Z-COO-CH₂CH₂]ₘ - (III)
   - wherein R₃ represents a group having general formula (II) or a hydrogen atom; Z represents a -CH=CH- group and m is an integer or fraction between 0 and 10, extremes included; with the proviso that when m is 0 and R₁ and R₂ are the same, R₃ can not be a hydrogen atom,
and bringing the temperature of the resulting mixture to a value which is at least equal to the melting point of the polyolefin wherein the filler (B) has not been pre-impregnated by the compound (c).

Particularly preferred reinforced thermoplastic polyolefin compositions of the present invention are those comprising 60% to 90% by weight of a polyolefin (A), from 10% to 40% by weight of a mineral filler (B) and from 0.5% to 3% by weight with respect to the mixture (A)+(B) of an unsaturated ester having general formula (I).

Specific examples of unsaturated esters having general formula (I) useful for the purposes of the present invention are:
- HOCH₂CH₂[OCO-CH=CH-COO-CH₂CH₂]_{0.6}-COO-CH=CH-COOH (M01)

   wherein, in formula (I), R₁ represents a group having general formula (III) wherein m = 0.6 and R₃ represents a group having general formula (II) with n = 0; R₂ represents a group having general formula (III) wherein m = 0 and R₃ represents a hydrogen atom;
- HOCH₂CH₂-OCO-CH=CH-COO-CH₂CH₂OH (M02)

   wherein, in formula (I), R₁ and R₂ both represent a group having general formula (II) wherein n = 0;
- HOCH₂CH₂-OCO-CH=CH-COOH (M03)

   wherein, in formula (I), R₁ represents a group having general formula (II) wherein n = 0; R₂ represents a group having general formula (III) wherein m = 0 and R₃ represents a hydrogen atom;
- HOCO-CH=CH-COO-CH₂CH₂OCO-CH=CH-COOH (M06)

   wherein, in formula (I), R₁ represents a group having general formula (III) wherein m = 0 and R₃ represents a hydrogen atom; R₂ represents a group having general formula (III) wherein m = 1 and R₃ represents a hydrogen atom.

The unsaturated esters having general formula (I) can be prepared, for example, according to the procedures described by W. Riemenschneider in: "Ester, Organic", Ulmann's Encyclopedia of Industrial Chemistry (1987), Vol. A9, page 572, 5th Edit., VCH Verlagsgesellschaft GmbH, Weinheim Ed.; and by J. Selley in: "Polyesters, unsaturated", Encyclopedia of Polymer Science and Engineering (1988), Vol. 12, page 259, John Wiley & Sons Ed., New York.

The polyolefin (A) which can be used for the purposes of the present invention can be a homopolymer of ethylene and/or a copolymer of ethylene with at least another α-olefin containing from 3 to 10 carbon atoms. Examples of these α-olefins are propylene, butene-1, hexene-1, heptene-1, etc. When the polyolefin is a homopolymer of ethylene or a copolymer of ethylene with smaller quantities such as, for example, 2%-25% by weight of at least another C₃-C₁₀ α-olefin, the density of the polyolefin is within the range of 0.85 g/cm³ and 0.97 g/cm³, preferably between 0.94 g/cm³ and 0.96 g/cm³.

The "Melt Flow Index" of the polyolefin at 190°C and at 2.16 Kg is, generally, less than 20 g/10 min, preferably between 2 g/10 min and 10 g/10 min.

Although high density polyolefins are preferred in the composition of the present invention, low density polyolefins such as, for example, low density polyethylene (LDPE) or low density linear polyethylene (LLDPE), alone or mixed with each other, can be used, if desired, for particular applications.

These types of polyethylene are known in commerce, for example, under the trade-name of ESCORENE® LL 1201 XV (LLDPE) of EXXON; RIBLENE® AK 1912 (LDPE) of ENICHEM; ERACLENE® ML 94, MM 95 and ML 75 (HDPE) of ENICHEM.

High density polyethylene (HDPE) is particulary preferred in the compositions of the present invention.

Mineral fillers (B) which can be used for the purposes of the present invention are the oxides or hydrates or sulfates or carbonates of a metal of group 2 of the Periodic Table available on the market, kaolin, etc. Commercial mineral fillers used for the purpose are, for example, Satintone 5 (kaolin) of Engelhard Corporation, Carbocal PCL (calcium carbonate) of the Società Generale per l'Industria della Magnesia S.p.A., Calcitec M/2 (calcium carbonate) of Mineraria Sacilese S.p.A.

Calcium carbonate ground or precipitated with carbon dioxide and kaolin, are particularly preferred in the compositions of the present invention.

The particle size of the mineral filler used, as is well-known in the art, is important and is selected in relation to the properties desired. Fine particles, in the presence of an "adhesion promoter", generally, tend to give products with a higher impact strength than products containing larger particles, even if the rigidity decreases.

In the case of the present invention, the particle size of the mineral fillers (B) is between 0.02 µm and 40 µm, preferably between 0.07 µm and 10 µm.

According to a preferred embodiment, the compositions of the present invention can be prepared by feeding the components of the composition, in any succession, into a suitable mixing device for the production of thermoplastic compositions, subsequently bringing the temperature to a value which is at least equal to the melting point of the polymer such as, for example, to a temperature of between 180°C and 260°C. For this purpose mono- and twin-screw mixers, Banbury mixers, Brabender mixers and other well-known mixers can be used for the preparation of thermoplastic polymers.

After the mixing of the components, the compositions can be fed directly to the device for the production of the article, especially to an injection moulding apparatus or an apparatus for the extrusion of strips or other profiles or also to a "blow moulding" apparatus. It is generally preferable however to first form small bodies such as pellets, for example, which are subsequently fed to an apparatus for the production of shaped articles.

The reinforced polymeric compositions of the present invention are characterized by a high resilience (Izod) especially at low temperatures such as, for example, at -40°C, and by a high fluidity which makes them particularly suitable for use in injection moulding. In fact, the "Melt Flow Index" (MFI) of the compositions of the present invention is generally higher than 0.5 g/10 min at 190°C and 2.16 Kg.

The usual additives and/or auxiliary substances can optionally be added to the compositions of the present invention, if necessary, to improve their characteristics of thermal stability, oxidation stability and stability to light, and other additives such as, for example, pigments, dyes, flame-retardants, release agents, other types of thermoplastic resins or rubbers for giving impact-resistant properties. These additives are generally used in quantities of between 0.1% and 50% by weight.

Some illustrative but non-limiting examples are given below to provide a better understanding of the present invention and for its embodiment.

In the following examples, the following methods were used for measuring the characteristics of the polymer.

### Mechanical properties

- the Izod resilience with notch at +23°C and at -40°C according to ASTM D 256 on samples having a thickness of 3.2 mm;
- tensile modulus, flexural modulus and flexural strength according to ASTM D 638 and ASTM D790 were determined.

### Thermal properties

The deflection temperature under load of 0.455 MPa (HDT) was determined according to ASTM D 648 and the Vicat temperature, at 5 kg, according to ASTM D1525.

### Rheological properties

The "Melt Flow Index" (MFI) was determined according to ASTM D 1238, at 190°C and 2.16 Kg, at 190°C and 10 Kg and at 190°C and 21.6 Kg.

### EXAMPLES 1 - 13

Polymeric compositions were prepared in a Plasticorder PL2000 Brabender mixer, with a cell volume of 50 ml, operating at an initial temperature of 160°C and increasing, within an operating range of 6 minutes, the rotor velocity from 50 rpm to 150 rpm.

Table 1 shows both the quantities (weight %) and types of substances used in the above polymeric compositions, and the resilience values at temperatures of 23°C and -40°C obtained on notched test-samples. The samples were obtained from plaques compression-moulded with a Campana P7 34E press, operating at a temperature of 190°C and a pressure of 2.5 ton./cm².

Table 1 indicates with the abbreviations M01, M02, M03 and M06 the unsaturated esters having general formula (I) (the products corresponding to these abbreviations are specified above).

From Table 1 it can be observed that the effect of the addition of the mineral filler to the polyolefin matrix determines a drop of the resilience in the mixture (Reference Examples 1 and comparative examples 2, 4 and 6). Surprisingly, the addition of unsaturated esters having general formula (I) determines a marked increase in the resilience of the mixture with respect to the polyethylene matrix as such, both at 23°C and at -40°C. From the examples indicated in Table 1 it can also be seen that the best polymeric compositions were obtained using as mineral filler kaolin and calcium carbonate precipitated with carbon dioxide (PCL) which have particles with a finer particle size (average diameter of between 0.7 and 0.8 µm).

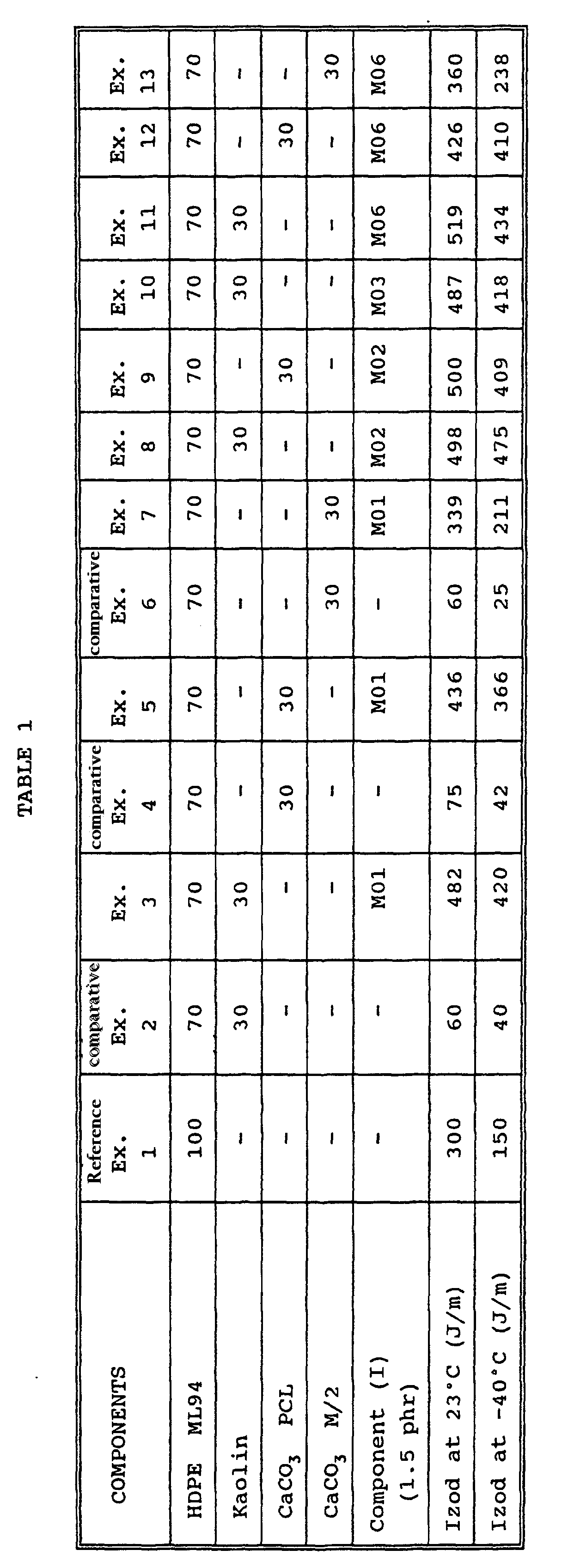

### EXAMPLES 14 - 24

The mixtures whose compositions are indicated in Table 2 were prepared in an APV-2050 co-rotating twin-screw extruder having a screw diameter Φ = 52 mm and L/D = 30. Table 2 shows both the quantities (weight %) and types of substances used in the above polymeric compositions, and the values of the physico-mechanical properties.

The physico-mechanical characterization was carried out on test-samples obtained by injection-moulding with a Battenfeld 750 press. Reference Examples 14, comparative examples 15, Reference 19, comparative examples 20 and 22, show the effect of the mineral filler on the physico-mechanical properties of the products obtained with particular respect to the modulus and impact strength of the materials.

As expected, the introduction of 30% by weight of kaolin into the matrix determines an increase in both the viscosity of the molten product (as shown by the MFI values at 190°C and 2.16 Kg which, in examples 14 and 15, pass in fact from 2.8 to 1.0 g/10') and the elasticity modulus. On the other hand, as already seen in comparative examples 2, 4 and 6 indicated in Table 1, there is a considerable decrease in the resilience with respect to the polyethylene matrix as such.

Also in this case, the introduction of the unsaturated ester having general formula (I) not only enables the resilience characteristics of the polyolefin matrix in the polyethylene composition-mineral filler to be saved, but actually distinctly improves these and also maintains or improves all the other mechanical properties, which are already high thanks to the introduction of the mineral filler into the composition, such as for example, the tensile strength, Vicat thermal and HDT properties, etc.

In particular, from examples 16-18 it can be seen that, although decreasing the content of both the mineral filler and unsaturated ester having general formula (I), the resilience values remain extremely high even at very low temperatures. In addition, the introduction of the unsaturated ester as "adhesion promoter", practically does not modify the viscosity of the molten product of the mixture.

Examples 19-23 show that the effects of the unsaturated ester having general formula (I) are maintained even if the Eraclene ML 75 matrix is substituted with a matrix having a higher fluidity Eraclene MM 95 (reference example 19, comparative example 20 and example 21), or if the kaolin mineral filler is substituted with calcium carbonate PCL (comparative example 22 and example 23).

In comparative example 24 a composition is prepared, again using an APV-2050 twin-screw extruder and subsequently injection-moulded with a Battenfeld 750 press, containing Eraclene MM 95, kaolin (30% by weight) and the modifier M07 (1.5 phr) having general formula (I) wherein R₁ represents a group having general formula (II) wherein n = 8.1; R₂ represents a group having general formula (III) wherein m = 0 and R₃ represents a hydrogen atom. This compound M07 was produced by reacting a mole of maleic acid with a mole of polyoxyethyleneglycol having a molecular weight of 400, substances which, if added in suitable quantities and conditions to compositions based on polyolefin and mineral filler, increase the impact strength of the injection moulded products, as described in German patent DD 200.429. In this case however, as can be seen from the values shown in Table 2, the modifier M07 does not act as "adhesion promoter" and consequently the mechanical characteristics, in particular the resilience values, are completely analogous to those given in example 20 in which the "adhesion promoter" is not present.

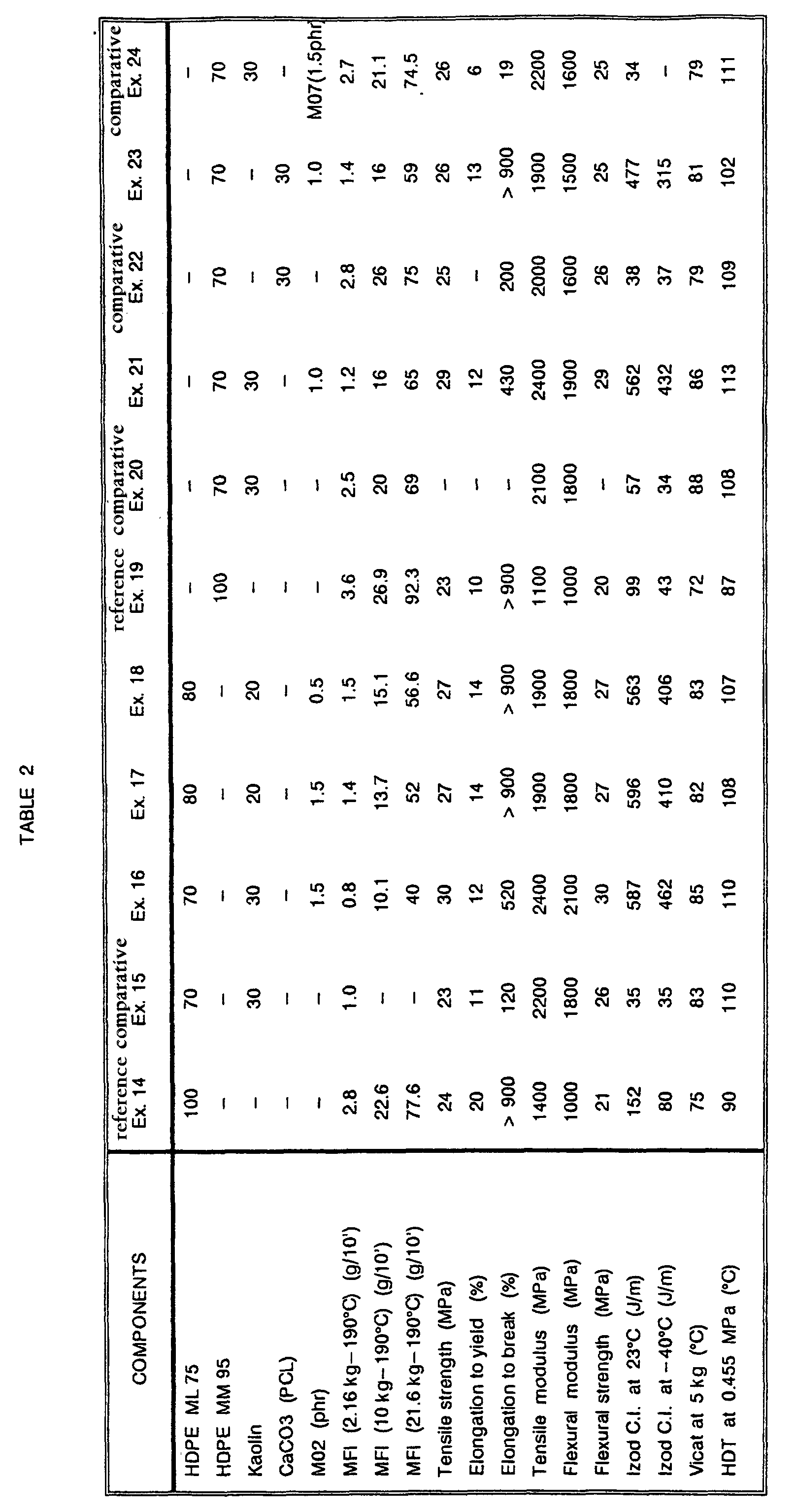

## Claims

1. Process for the preparation of reinforced thermoplastic polyolefin compositions comprising mixing:
(A) from 30% to 98% by weight of a polyolefin selected from homopolymers of ethylene and/or copolymers of ethylene with at least another α-olefin containing from 3 to 10 carbon atoms, and respectively;
(B) from 70% to 2% by weight of a mineral filler;
(C) from 0.1 to 10 parts by weight with respect to 100 parts of (A) + (B) of an unsaturated ester having general formula (I):
R₁-OCO-Z-COOR₂ (I)
wherein:
- R₁ and R₂, the same or different, represent one of the following groups having general formula (II) or (III):
HOCH₂CH₂-[OCH₂CH₂]ₙ - (II)
wherein n is an integer or fraction between 0 and 2, extremes included;
R₃-[OCO-Z-COO-CH₂CH₂]ₘ - (III)
wherein R₃ represents a group having general formula (II) or a hydrogen atom; Z represents a -CH=CH- group and m is an integer or fraction between 0 and 10, extremes included; with the proviso that when m is 0 and R₁ and R₂ are the same, R₃ can not be a hydrogen atom,
and bringing the temperature to a value which is at least equal to the melting point of the polyolefin, wherein the filler (B) has not been pre-impregnated by compound (c).

2. Process for the preparation of the reinforced thermoplastic polyolefin compositions according to claim 1, **characterized in that** the same is carried out in the presence of an unsaturated ester having general formula (I) as the following:
HOCH₂CH₂[OCO-CH=CH-COO-CH₂CH₂]_{0.6}-COO-CH=CH-COOH.

3. Process for the preparation of the reinforced thermoplastic polyolefin compositions according to claim 1, **characterized in that** the same is carried out in the presence of an unsaturated ester having the following general formula:
HOCH₂CH₂-OCO-CH=CH-COO-CH₂CH₂OH.

4. Process for the preparation of the reinforced thermoplastic polyolefin compositions according to claim 1, **characterized in that** the same is carried out in presence of unsaturated ester having the following general formula:
HOCH₂CH₂-OCO-CH=CH-COOH.

5. Process for the preparation of the reinforced theromplastic polyolefin compositions according to claim 1, **characterized in that** the same is carried out in the presence of unsaturated ester having the following general formula:
HOCO-CH=CH-COO-CH₂CH₂OCO-CH=CH-COOH.

6. Process for the preparation of the reinforced thermoplastic polyolefin compositions according to any of the previous claims, **characterized in that** the polyolefin (A) is a homopolymer of ethylene and/or a copolymer of ethylene with 2%-25% of at least another α-olefin containing from 3 to 10 carbon atoms.

7. Process for the preparation of the reinforced thermoplastic polyolefin compositions according to claim 6, **characterized in that** the density of the polyolefin is within the range of 0.85 g/cm³ and 0.97 g/cm³ and the "Melt Flow Index" is less than 20 g/10 min.

8. Process for the preparation of the reinforced thermoplastic polyolefin compositions according to claim 6, **characterized in that** the density of the polyolefin is within the range of 0.94 g/cm³ and 0.96 g/cm³ and the "Melt Flow Index" at 190°C and at 2.16 kg is between 2 g/10 min and 10 g/10 min.

9. Process for the preparation of the reinforced thermoplastic polyolefin compositions according to any of the previous claims, **characterized in that** the same is carried out in the presence of mineral fillers (B) selected from the oxides or hydrates or sulfates or carbonates of a metal of group 2 of the Periodic Table and kaolin.

10. Process for the preparation of the reinforced thermoplastic polyolefin compositions according to claim 9, **characterized in that** the mineral fillers (B) are selected from calcium carbonate ground or precipitated with carbon dioxide and kaolin.

11. Process for the preparation of the reinforced thermoplastic polyolefin compositions according to any of the previous claims, **characterized in that** the mineral fillers (B) are in the form of particles having dimensions of between 0.02 µm and 40 µm.

## Patentansprüche

1. Verfahren zur Herstellung von verstärkten thermoplastischen Polyolefinzusammensetzungen, umfassend das Mischen von:
(A) 30 bis 98 Gew.% eines Polyolefins, ausgewählt aus Homopolymeren von Ethylen und/oder Copolymeren von Ethylen mit mindestens einem anderen α-Olefin, welches 3 bis 10 Kohlenstoffatome enthält, und entsprechend:
(B) 70 bis 2 Gew.% eines mineralischen Füllstoffes;
(C) 0,1 bis 10 Gew.%, bezogen auf 100 Teile von (A) + (B) eines ungesättigten Esters mit der allgemeinen Formel (I):
R₁-OCO-Z-COOR₂ (I)
worin
- R₁ und R₂ gleich oder verschieden sein können und eine der folgenden Gruppen mit der allgemeinen Formel (II) oder (III) repräsentieren:
HOCH₂CH₂-[OCH₂CH₂]ₙ - (II)
worin n eine ganze Zahl oder ein Bruchteil zwischen 0 und 2 darstellt, wobei die Grenzwerte eingeschlossen sind;
R₃-[OCO-Z-COO-CH₂CH₂]ₘ - (III)
worin R₃ eine Gruppe repräsentiert, welche die allgemeine Formel (II) aufweist oder ein Wasserstoffatom ist; worin Z eine -CH=CH- Gruppe repräsentiert und m eine ganze Zahl oder einen Bruchteil zwischen 0 und 10 darstellt, die Grenzwerte eingeschlossen; vorausgesetzt, dass wenn m gleich 0 ist und R₁ und R₂ gleich sind und R₃ nicht Wasserstoff sein kann;
und Erhöhen der Temperatur auf einen Wert, der mindestens gleich dem Schmelzpunkt des Polyolefins ist, wobei der Füllstoff (B) mit der Verbindung (C) nicht vorimprägniert wurde.

2. Verfahren zur Herstellung von verstärkten thermoplastischen Polyolefinzusammensetzungen nach Anspruch 1, **dadurch gekennzeichnet, dass** dieses durchgeführt wird in Gegenwart eines ungesättigten Esters mit der allgemeinen Formel (I) wie folgt:
HOCH₂CH₂[OCO-CH=CH-COO-CH₂CH₂]_{0.6}-COO-CH=CH-COOH.

3. Verfahren zur Herstellung von verstärkten thermoplastischen Polyolefinzusammensetzungen nach Anspruch 1, **dadurch gekennzeichnet, dass** dieses durchgeführt wird in Gegenwart eines ungesättigten Esters, welcher die allgemeine Formel aufweist:
HOCH₂CH₂-OCO-CH=CH-COO-CH₂CH₂OH.

4. Verfahren zur Herstellung von verstärkten thermoplastischen Polyolefinzusammensetzungen nach Anspruch 1, **dadurch gekennzeichnet, dass** das Verfahren durchgeführt wird in Gegenwart eines ungesättigten Esters mit der folgenden allgemeinen Formel:
HOCH₂CH₂-OCO-CH=CH-COOH.

5. Verfahren zur Herstellung von verstärkten thermoplastischen Polyolefinzusammensetzungen nach Anspruch 1, **dadurch gekennzeichnet, dass** dieses durchgeführt wird in Gegenwart eines ungesättigten Esters mit der folgenden allgemeinen Formel:
HOCO-CH=CH-COO-CH₂CH₂OCO-CH=CH-COOH.

6. Verfahren zur Herstellung von verstärkten thermoplastischen Polyolefinzusammensetzungen nach einem der voranstehenden Ansprüche, **dadurch gekennzeichnet, dass** das Polyolefin (A) ein Homopolymer von Ethylen und/oder ein Copolymer von Ethylen mit 2 bis 25 % mindestens eines anderen α-Olefins ist, welches 3 bis 10 Kohlenstoffatome umfasst.

7. Verfahren zur Herstellung von verstärkten thermoplastischen Polyolefinzusammensetzungen nach Anspruch 6, **dadurch gekennzeichnet, dass** die Dichte des Polyolefins im Bereich von 0,85 g/cm³ bis 0,97 g/cm³ liegt und dass der "Melt Flow Index" geringer ist als 20 g/10 Min.

8. Verfahren zur Herstellung von verstärkten thermoplastischen Polyolefinzusammensetzungen nach Anspruch 6, **dadurch gekennzeichnet, dass** die Dichte des Polyolefins im Bereich von 0,94 g/cm³ bis 0,96 g/cm³ liegt und dass der "Melt Flow Index" bei 190°C und bei 2,16 Kg zwischen 2 g/10 Min. und 10 g/10 Min. liegt.

9. Verfahren zur Herstellung von verstärkten thermoplastischen Polyolefinzusammensetzungen nach einem der voranstehenden Ansprüche, **dadurch gekennzeichnet, dass** das Verfahren durchgeführt wird in Gegenwart eines mineralischen Füllstoffes (B), welcher ausgewählt ist aus Oxiden oder Hydraten oder Sulfaten oder Carbonaten eines Metalls der Gruppe II des Periodensystems und Kaolin.

10. Verfahren zur Herstellung von verstärkten thermoplastischen Polyolefinzusammensetzungen nach Anspruch 9, **dadurch gekennzeichnet, dass** der mineralische Füllstoff (B) ausgewählt ist aus Calciumcarbonat, gemahlen oder ausgefällt mit Kohlendioxid und Kaolin.

11. Verfahren zur Herstellung von verstärkten thermoplastischen Polyolefinzusammensetzungen nach einem der voranstehenden Ansprüche, **dadurch gekennzeichnet, dass** der mineralische Füllstoff (B) die Form von Partikeln mit Dimensionen zwischen 0,02 µm und 40 um aufweist.

## Revendications

1. Procédé de préparation de compositions renforcées de polyoléfine thermoplastique consistant à mélanger:
5 (A) de 30% à 98% en poids d'une polyoléfine choisie parmi les homopolymères d'éthylène et/ou les copolymères d'éthylène composés d'au moins une autre α-oléfine contenant entre 3 et 10 atomes de carbone, et respectivement;
(B) de 70% à 2% en poids d'une charge minérale;
(C) de 0,1 à 10 parties en poids, par rapport à 100 parties de (A)+(B), d'un ester insaturé de formule générale (I):
R₁-OCO-Z-COOR₂ (I)
dans laquelle:
- R₁ et R₂, identiques ou différents, représentent un des groupes suivants de formule générale (II) ou (III):
HOCH₂CH₂-[OCH₂CH₂]ₙ - (II)
dans laquelle n est un nombre entier ou fractionnaire allant de 0 à 2 inclus;
R₃-[OCO-Z-COO-CH₂CH₂]ₘ - (III)
dans laquelle R₃ représente un groupe de formule générale (II) ou un atome d'hydrogène; Z représente un groupe -CH=CH- et m est un nombre entier ou fractionnaire allant de 0 à 10 inclus; à condition que, lorsque m vaut 0 et R₁ et R₂ sont identiques, R₃ ne puisse pas être un atome d'hydrogène, et en amenant la température à une valeur qui est au moins égale au point de fusion de la polyoléfine, dans laquelle la charge (B) n'a pas été pré-imprégnée par le composé (C).

2. Procédé de préparation des compositions renforcées de polyoléfine thermoplastique selon la revendication 1, **caractérisé en ce que** celui-ci est réalisé en présence d'un ester insaturé de formule générale (I) exprimée comme suit:
HOCH₂CH₂[OCO-CH=CH-COO-CH₂CH₂]_{0,6}-COO-CH=CH-COOH.

3. Procédé de préparation des compositions renforcées de polyoléfine thermoplastique selon la revendication 1, **caractérisé en ce que** celui-ci est réalisé en présence d'un ester insaturé de formule générale suivante:
HOCH₂CH₂-OCO-CH=CH-COO-CH₂CH₂OH.

4. Procédé de préparation des compositions renforcées de polyoléfine thermoplastique selon la revendication 1, **caractérisé en ce que** celui-ci est réalisé en présence d'un ester insaturé de formule générale suivante:
HOCH₂CH₂-OCO-CH=CH-COOH.

5. Procédé de préparation des compositions renforcées de polyoléfine thermoplastique selon la revendication 1, **caractérisé en ce que** celui-ci est réalisé en présence d'un ester insaturé de formule générale suivante:
HOCO-CH=CH-COO-CH₂CH₂OCO-CH=CH-COOH.

6. Procédé de préparation des compositions renforcées de polyoléfine thermoplastique selon l'une quelconque des revendications précédentes, **caractérisé en ce que** la polyoléfine (A) est un homopolymère d'éthylène et/ou un copolymère d'éthylène comprenant entre 2% et 25% d'au moins une autre α-oléfine contenant entre 3 et 10 atomes de carbone.

7. Procédé de préparation des compositions renforcées de polyoléfine thermoplastique selon la revendication 6, **caractérisé en ce que** la masse volumique de la polyoléfine est dans la gamme allant de 0,85 g/cm³ à 0,97 g/cm³ et « l'indice de viscosité » est inférieur à 20 g/10 min.

8. Procédé de préparation des compositions renforcées de polyoléfine thermoplastique selon la revendication 6, **caractérisé en ce que** la masse volumique de la polyoléfine est dans la gamme allant de 0,94 g/cm³ à 0,96 g/cm³ et « l'indice de viscosité », à 190°C et sous 2,16 kg, va de 2 g/10 min à 10 g/10 min.

9. Procédé de préparation des compositions renforcées de polyoléfine thermoplastique selon l'une quelconque des revendications précédentes, **caractérisé en ce que** celui-ci est réalisé en présence de charges minérales (B) choisies parmi les oxydes ou les hydrates ou les sulfates ou les carbonates d'un métal du Groupe 2 de la classification périodique et le kaolin.

10. Procédé de préparation des compositions renforcées de polyoléfine thermoplastique selon la revendication 9, **caractérisé en ce que** les charges minérales (B) sont choisies parmi le carbonate de calcium broyé ou précipité avec du dioxyde de carbone et du kaolin.

11. Procédé de préparation des compositions renforcées de polyoléfine thermoplastique selon l'une quelconque des revendications précédentes, **caractérisé en ce que** les charges minérales (B) sont sous forme de particules ayant des dimensions allant de 0,02 µm à 40 µm.
